(19) Europäisches Patentamt
European Patent Office
Office européen des brevets

(11) EP 2 492 330 B1

(12) # EUROPEAN PATENT SPECIFICATION

(45) Date of publication and mention of the grant of the patent:
**30.07.2014 Bulletin 2014/31**

(51) Int Cl.:
***C09J 133/00*** *(2006.01)*

(21) Application number: **12157029.5**

(22) Date of filing: **27.02.2012**

(54) **Removable Water-Dispersible Acrylic Pressure-Sensitive Adhesive Composition and Pressure-Sensitive Adhesive Sheet**

Entfernbare, wasserdispergierte acrylhaltige druckempfindliche Haftzusammensetzung und druckempfindliches Haftblatt

Composition acrylique adhésive, sensible à la pression, à dispersion dans l'eau et amovible et feuille adhésive sensible à la pression

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2011 JP 2011040691**

(43) Date of publication of application:
**29.08.2012 Bulletin 2012/35**

(73) Proprietor: **Nitto Denko Corporation**
**Ibaraki-shi, Osaka 567-8680 (JP)**

(72) Inventors:
- **MITSUI, Kazuma**
  **Ibaraki-shi, Osaka 567-8680 (JP)**
- **AMANO, Tatsumi**
  **Ibaraki-shi, Osaka 567-8680 (JP)**
- **TAKASHIMA, Kyoko**
  **Ibaraki-shi, Osaka 567-8680 (JP)**
- **MORIMOTO, Yu**
  **Ibaraki-shi, Osaka 567-8680 (JP)**
- **YONEZAKI, Kousuke**
  **Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(56) References cited:
**EP-A2- 1 108 770**
**EP-A2- 1 340 797**
**EP-A2- 1 690 907**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a removable, water-dispersible acrylic pressure-sensitive adhesive composition. Specifically, the present invention relates to a removable water-dispersible acrylic pressure-sensitive adhesive composition capable of forming a pressure-sensitive adhesive layer which less suffers from appearance defects (poor appearance) such as dimples, thereby has a good appearance, is satisfactorily resistant to increase in adhesive strength with time, and less causes staining. The present invention also relates to a pressure-sensitive adhesive sheet including a pressure-sensitive adhesive layer formed from the pressure-sensitive adhesive composition.

### Background Art

In production and working processes of optical elements (optical members; optical materials) typified by optical films such as deflector plates, retardation films, and anti-reflective films, surface-protecting films are used as to be affixed to surfaces of such optical elements for the purpose typically of preventing surface defects and soiling, improving cutting workability, and suppressing cracking (see Patent Literature (PTL) 1 and 2). As such surface-protecting films, there are generally used removable pressure-sensitive adhesive sheets each including a plastic film substrate and, arranged on a surface thereof, a removable pressure-sensitive adhesive layer.

Solvent acrylic pressure-sensitive adhesives have been generally used as pressure-sensitive adhesives for these surface-protecting films (see PTL 1 and 2). These solvent acrylic pressure-sensitive adhesives contain organic solvents and are thereby intended to be switched to water-dispersible acrylic pressure-sensitive adhesives from the viewpoint of working environmental conditions upon coating (see PTL 3 to 5).

The surface-protecting films are desired to exhibit sufficient adhesiveness during affixation to optical elements. In addition, they are desired to have satisfactory peelability (removability) because they are peeled off (removed) after usage typically in production processes of optical elements. For having satisfactory removability, such surface-protecting films should have small peel strength (light releasability) and, in addition, properties not to be increased in adhesive strength (peel strength) with time after the affixation to an adherend such as an optical element (prevention of increase in adhesive strength).

For obtaining the properties such as light releasability (good removability) and prevention of increase in adhesive strength, it is effective to use a water-insoluble crosslinking agent in a pressure-sensitive adhesive (or pressure-sensitive adhesive composition). As examples of a pressure-sensitive adhesive composition using a water-insoluble crosslinking agent, there are known removable water-dispersible acrylic pressure-sensitive adhesive compositions each containing an oil-soluble crosslinking agent (see PTL 6 and 7) .

However, the aforementioned pressure-sensitive adhesive compositions and other water-dispersible acrylic pressure-sensitive adhesive compositions each using a water-insoluble crosslinking agent include large particles of the water-insoluble crosslinking agent that has been insufficiently dispersed and remained, and this often causes "dimples" and other appearance defects of the surface of a resulting pressure-sensitive adhesive layer upon formation thereof. For these reasons, the inspection of an adherend while a surface-protecting film is affixed thereon may be impeded or other problems may occur particularly when such a water-insoluble crosslinking agent is used for a pressure-sensitive adhesive layer of the surface-protecting film.

Accordingly, under current circumstances, there has not yet been obtained a removable water-dispersible acrylic pressure-sensitive adhesive composition capable of forming a pressure-sensitive adhesive layer which excels in adhesiveness and removability (particularly in prevention of increase in adhesive strength), less suffers from appearance defects such as "dimples", and has a good appearance.

Typically in a surface-protecting film use (particularly in a use of surface-protecting film for an optical element), staining (contamination) of the adherend surface causes problems such as adverse effects on optical properties of the optical element. The staining is due typically to remaining of the pressure-sensitive adhesive on the surface of the adherend (e.g., optical element) (so-called "adhesive residue") and due to transfer of components contained in the pressure-sensitive adhesive layer to the adherend surface upon removal of the pressure-sensitive adhesive sheet. To avoid these, pressure-sensitive adhesives and pressure-sensitive adhesive layers are strongly desired to less stain the adherend.

### Citation List

#### Patent Literature

PTL 1: Japanese Unexamined Patent Application Publication (JP-A) No. H11-961
PTL 2: Japanese Unexamined Patent Application Publication (JP-A) No. 2001-64607
PTL 3: Japanese Unexamined Patent Application Publication (JP-A) No. 2001-131512
PTL 4: Japanese Unexamined Patent Application Publication (JP-A) No. 2003-27026
PTL 5: Japanese Patent No. 3810490
PTL 6: Japanese Unexamined Patent Application Publication (JP-A) No. 2004-91563
PTL 7: Japanese Unexamined Patent Application Publication (JP-A) No. 2006-169496

## Summary of Invention

### Technical Problem

Accordingly, an object of the present invention is to provide a water-dispersible acrylic pressure-sensitive adhesive composition capable of forming a pressure-sensitive adhesive layer which is a removable pressure-sensitive adhesive layer, has a good appearance (less suffers from dimples and other appearance defects), is resistant to increase in adhesive strength, and less causes staining. Another object of the present invention is to provide a pressure-sensitive adhesive sheet having a pressure-sensitive adhesive layer formed from the pressure-sensitive adhesive composition.

### Solution to Problem

After intensive investigations to achieve the objects, the present inventors have found that, by including, as constituents, an acrylic emulsion polymer obtained from constitutive monomers in a specific composition; a water-insoluble crosslinking agent; and a carboxylic-acid-containing acrylic polymer obtained from constitutive monomers in a specific composition, there is obtained a water-dispersible acrylic pressure-sensitive adhesive composition (removable water-dispersible acrylic pressure-sensitive adhesive composition) capable of forming a pressure-sensitive adhesive layer which has a good appearance, is resistant to increase in adhesive strength, less causes staining, and is removable. The present invention has been made based on these findings.

Specifically, the present invention provides, in an aspect, a removable water-dispersible acrylic pressure-sensitive adhesive composition which includes an acrylic emulsion polymer (A), a water-insoluble crosslinking agent (B), and a carboxylic-acid-containing acrylic polymer (C). The acrylic emulsion polymer (A) includes a (meth)acrylic alkyl ester and a carboxyl-containing unsaturated monomer as essential constitutive monomers and has a content of the (meth)acrylic alkyl ester of from 70 to 99.5 percent by weight and a content of the carboxyl-containing unsaturated monomer of from 0.5 to 10 percent by weight, each based on the total amount of constitutive monomers. The carboxylic-acid-containing acrylic polymer (C) includes (meth)acrylic acid as an essential constitutive monomer and has a total content of acrylic acid and methacrylic acid of 11 percent by weight or more based on the total amount of constitutive monomers.

In the removable water-dispersible acrylic pressure-sensitive adhesive composition, the acrylic emulsion polymer (A) is preferably a polymer polymerized with a reactive emulsifier including a radically polymerizable functional group in a molecule.

In a preferred embodiment of the removable water-dispersible acrylic pressure-sensitive adhesive composition, the water-insoluble crosslinking agent (B) has a functional group reactive with carboxyl group, and the functional group is contained in a number of moles of from 0.3 to 1.3 moles per 1 mole of carboxyl group in the carboxyl-containing unsaturated monomer used as the constitutive monomer of the acrylic emulsion polymer (A).

The present invention provides, in another aspect, a pressure-sensitive adhesive sheet which includes a substrate; and a pressure-sensitive adhesive layer arranged on at least one side of the substrate and formed from the removable water-dispersible acrylic pressure-sensitive adhesive composition.

In the pressure-sensitive adhesive sheet, the pressure-sensitive adhesive layer preferably has a solvent-insoluble content of 90 percent by weight or more and an elongation at break of 200% or less.

The pressure-sensitive adhesive sheet may be used as a surface-protecting film for an optical element. Advantageous Effects of Invention

The removable water-dispersible acrylic pressure-sensitive adhesive composition according to the present invention is water-dispersible and has the above configuration. Accordingly, a pressure-sensitive adhesive layer formed from the pressure-sensitive adhesive composition, and a pressure-sensitive adhesive sheet having the pressure-sensitive adhesive layer have satisfactory removability, high adhesiveness, and good appearances (good appearance characteristics), less cause staining of the adherend surface after removal thereof, and have satisfactory less-staining properties. They are resistant to increase in adhesive strength to the adherend with time and have satisfactory removability. They are therefore useful for protecting the surfaces of optical films.

These and other objects, features, and advantages of the present invention will be more fully understood from the

following description of embodiments. All numbers are herein assumed to be modified by the term "about."

Description of Embodiments

A removable water-dispersible acrylic pressure-sensitive adhesive composition according to an embodiment of the present invention (hereinafter also simply referred to as a "pressure-sensitive adhesive composition of the present Invention") contains an acrylic emulsion polymer (A), a water-insoluble crosslinking agent (B), and a carboxylic-acid-containing acrylic polymer (C) as essential components.

[Acrylic Emulsion Polymer (A)]

The acrylic emulsion polymer (A) in the pressure-sensitive adhesive composition of the present invention is a polymer including a (meth)acrylic alkyl ester and a carboxyl-containing unsaturated monomer as essential constitutive monomers (feed monomer components). Specifically, the acrylic emulsion polymer (A) is a polymer obtained from a monomer mixture including a (meth)acrylic alkyl ester and a carboxyl-containing unsaturated monomer as essential components. Each of different acrylic emulsion polymers (A) may be used alone or in combination. As used herein the term "(meth)acrylic" refers to "acrylic" and/or "methacrylic" (either "acrylic" or "methacrylic", or both).

The (meth)acrylic alkyl ester is used as a principal monomer component constituting the acrylic emulsion polymer (A) and mainly plays the function of developing basic properties as a pressure-sensitive adhesive (or pressure-sensitive adhesive layer), such as adhesiveness and peelability (removability). Among such (meth)acrylic alkyl esters, acrylic alkyl esters are liable to effectively impart flexibility to the polymer constituting the pressure-sensitive adhesive layer and to thereby exhibit the effect of allowing the pressure-sensitive adhesive layer to develop adhesion and tackiness; whereas methacrylic alkyl esters are liable to impart hardness (rigidity) to the polymer constituting the pressure-sensitive adhesive layer and to exhibit the effects of controlling the removability of the pressure-sensitive adhesive layer. Examples of the (meth)acrylic alkyl esters include, but are not limited to, (meth)acrylic alkyl esters each having a linear, branched-chain or cyclic alkyl group preferably having 1 to 16 carbon atoms, more preferably having 2 to 10 carbon atoms, and furthermore preferably having 4 to 8 carbon atoms.

Of acrylic alkyl esters, though not limited, acrylic alkyl esters each having an alkyl group containing 2 to 14 (more preferably 4 to 8) carbon atoms are preferred, and examples thereof include acrylic alkyl esters each having a linear or branched chain alkyl group, such as n-butyl acrylate, isobutyl acrylate, s-butyl acrylate, isoamyl acrylate, hexyl acrylate, heptyl acrylate, octyl acrylate, 2-ethylhexyl acrylate, isooctyl acrylate, nonyl acrylate, and isononyl acrylate; and alicyclic acrylic alkyl esters such as cyclohexyl acrylate, bornyl acrylate, and isobornyl acrylate. Among them, 2-ethylhexyl acrylate and n-butyl acrylate are preferred.

Of methacrylic alkyl esters, though not limited, methacrylic alkyl esters each having an alkyl group containing 2 to 16 (more preferably 2 to 8) carbon atoms are preferred, and examples thereof include methacrylic alkyl esters each having a linear or branched chain alkyl group, such as ethyl methacrylate, propyl methacrylate, isopropyl methacrylate, n-butyl methacrylate, isobutyl methacrylate, s-butyl methacrylate, and t-butyl methacrylate; and alicyclic methacrylic alkyl esters such as cyclohexyl methacrylate, bornyl methacrylate, and isobornyl methacrylate. Among them, n-butyl methacrylate is preferred.

As the constitutive monomers of the acrylic emulsion polymer (A), methyl methacrylate and/or isobornyl acrylate may be used for the purpose of improving the appearance of the pressure-sensitive adhesive layer described later.

The (meth)acrylic alkyl ester(s) may be suitably selected according typically to the target tackiness, and each of different (meth)acrylic alkyl esters may be used alone or in combination.

The acrylic emulsion polymer (A) contains the (meth)acrylic alkyl ester(s) in a content of typically from 70 to 99.5 percent by weight, more preferably from 85 to 99 percent by weight, and furthermore preferably from 91 to 98 percent by weight, based on total amount of constitutive monomers (total constitutive monomers) constituting the acrylic emulsion polymer (A) (as 100 percent by weight). The (meth)acrylic alkyl ester(s), if present in a content of more than 99.5 percent by weight, may cause the pressure-sensitive adhesive composition to give a pressure-sensitive adhesive layer having not so satisfactory anchoring capability, causing not so little staining, and having not so satisfactory emulsion stability. This is because the relative content of the carboxyl-containing unsaturated monomer in the constitutive monomers becomes low. In contrast, the (meth)acrylic alkyl ester(s), if present in a content of less than 70 percent by weight, may cause the pressure-sensitive adhesive layer to have insufficient adhesiveness and removability. Though not critical, acrylic alkyl esters and methacrylic alkyl esters may be contained in the (meth)acrylic alkyl esters in a ratio in content (ratio of the content of acrylic alkyl esters to the content of methacrylic alkyl esters; [content of acrylic alkyl esters : content of methacrylic alkyl esters]) of preferably from 100:0 to 30:70 (by weight), and more preferably from 100:0 to 50:50.

The carboxyl-containing unsaturated monomer can exhibit the function of forming a protective layer on the surface of emulsion particles composed of the acrylic emulsion polymer (A) to thereby prevent shear fracture of the emulsion particles. This function is further improved by neutralizing the carboxyl group with a base. The stability of the

emulsion particles against shear fracture is more generally referred to as mechanical stability. One or more multifunctional compounds (e.g., multifunctional epoxy compounds) being reactive with carboxyl group may be used in combination with the carboxyl-containing unsaturated monomer. The multifunctional compounds may act as crosslinking points during the formation of a pressure-sensitive adhesive layer through removal of water. In addition, the carboxyl-containing unsaturated monomer may make the pressure-sensitive adhesive layer to have increased adhesion (anchoring capability) to the substrate through the multifunctional compounds. Examples of such carboxyl-containing unsaturated monomers include (meth)acrylic acid (acrylic acid, methacrylic acid), itaconic acid, maleic acid, fumaric acid, crotonic acid, carboxyethyl acrylate, and carboxypentyl acrylate. As used herein the "carboxyl-containing unsaturated monomer(s)" also include acid anhydride-containing unsaturated monomers such as maleic anhydride and itaconic anhydride. Among them, acrylic acid is preferred because of being liable to have a high relative concentration in the surface of emulsion particles and to thereby form a denser protective layer.

The content of the carboxyl-containing unsaturated monomer(s) is from 0.5 to 10 percent by weight, preferably from 1 to 5 percent by weight, and more preferably from 2 to 4 percent by weight, based on total amount of constitutive monomers (total constitutive monomers) constituting the acrylic emulsion polymer (A) (as 100 percent by weight). The carboxyl-containing unsaturated monomer(s), if present in a content of more than 10 percent by weight, may undergo polymerization in water to cause thickening (increase in viscosity), because such carboxyl-containing unsaturated monomers (e.g., acrylic acid) are generally soluble in water. In addition, the pressure-sensitive adhesive layer in this case may have, after its formation, increasing interaction with a functional group on the surface of a deflector plate (an adherend) and thereby have an increasing adhesive strength with time, and this may impede removal of the pressure-sensitive adhesive layer from the adherend. In contrast, the carboxyl-containing unsaturated monomer(s), if present in a content of less than 0.5 percent by weight, may cause the emulsion particles to have insufficient mechanical stability and may invite insufficient adhesion (anchoring capability) between the pressure-sensitive adhesive layer and the substrate to cause adhesive residue.

Monomer components (constitutive monomers) constituting the acrylic emulsion polymer (A) may further include one or more additional monomer components for imparting a specific function, in combination with the (meth)acrylic alkyl ester(s) and the carboxyl-containing unsaturated monomer(s). As such monomer components, amido-containing monomers (e.g., (meth)acrylamide, N,N-diethyl(meth)acrylamide, and N-isopropyl(meth)acrylamide) and/or amino-containing monomers (e.g., N,N-dimethylaminoethyl (meth)acrylate and N,N-dimethylaminopropyl (meth)acrylate) may be added (used) in an amount per each category of from 0.1 to 15 percent by weight, for the purpose of increasing cohesive strength. Typically for adjusting refractive index and/or for improving reworkability, (meth)acrylic aryl esters such as phenyl (meth)acrylate; vinyl esters such as vinyl acetate and vinyl propionate; and styrenic monomers such as styrene may be added (used) in an amount per each category of 15 percent by weight or less. For improving crosslinking in the emulsion particles and improving cohesive strength, epoxy-containing monomers such as glycidyl (meth)acrylate and allyl glycidyl ether; and/or multifunctional monomers such as trimethylolpropane tri(meth)acrylate and divinylbenzene may be added (used) in an amount per each category of less than 5 percent by weight. For forming hydrazide crosslinks with a combination use of a hydrazide crosslinking agent and thereby particularly improving less-staining properties, keto-containing unsaturated monomers such as diacetoneacrylamide (DAAM), allyl acetoacetate, and 2-(acetoacetoxy)ethyl (meth)acrylate may be added (used) in an amount of less than 10 percent by weight (preferably from 0.5 to 5 percent by weight).

In addition, a hydroxyl-containing unsaturated monomer may be used as the additional monomer component. Examples thereof include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol(meth)acrylamide, vinyl alcohol, allyl alcohol, 2-hydroxyethyl vinyl ether, 4-hydroxybutyl vinyl ether, and diethylene glycol monovinyl ether. The amount of such hydroxyl-containing unsaturated monomers to be added (to be used) is preferably minimized from the viewpoint of further reducing whitening staining. Specifically, the constitutive monomers for constituting the acrylic emulsion polymer (A) contain a hydroxyl-containing unsaturated monomer in an amount of preferably less than 1 percent by weight, more preferably less than 0.1 percent by weight, and furthermore preferably, the constitutive monomers contain substantially no hydroxyl-containing unsaturated monomer (e.g., in a content of less than 0.05 percent by weight). However, such a hydroxyl-containing unsaturated monomer may be added (used) in an amount of from about 0.01 to about 10 percent by weight when used for the purpose of introducing crosslinking points typically of crosslinking between hydroxyl group and isocyanate group or crosslinking of a metal crosslinking agent.

The amounts of the additional monomer components to be added (to be used) are indicated as contents based on total amount of constitutive monomers (total constitutive monomers) constituting the acrylic emulsion polymer (A) (as 100 percent by weight).

In particular, at least one monomer selected from the group consisting of methyl methacrylate, isobornyl acrylate, N,N-diethylacrylamide, and vinyl acetate is preferably used as a monomer component (constitutive monomer) constituting the acrylic emulsion polymer (A) from the viewpoint of improving the appearance of a pressure-sensitive adhesive sheet

(pressure-sensitive adhesive layer) obtained from the pressure-sensitive adhesive composition of the present invention. Among them, methyl methacrylate is particularly preferably used. Though not critical, the content of the monomer(s) (the monomer(s) selected from the group consisting of methyl methacrylate, isobornyl acrylate, N,N-diethylacrylamide, and vinyl acetate) is preferably from 0.5 to 15 percent by weight, more preferably from 1 to 10 percent by weight, and furthermore preferably from 2 to 5 percent by weight, based on total amount of constitutive monomers (total constitutive monomers) constituting the acrylic emulsion polymer (A) (as 100 percent by weight). The monomer(s), if present in a content of less than 0.5 percent by weight, may not effectively help the pressure-sensitive adhesive layer to have an improved appearance. In contrast, the monomer, if present in a content of more than 15 percent by weight, may cause the polymer constituting the pressure-sensitive adhesive layer to be excessively rigid and may thereby cause insufficient adhesion. When two or more monomers selected from the group consisting of methyl methacrylate, isobornyl acrylate, N,N-diethylacrylamide, and vinyl acetate are contained in the constitutive monomers constituting the acrylic emulsion polymer (A), the total amount (total content) of methyl methacrylate, isobornyl acrylate, N,N-diethylacrylamide, and vinyl acetate may fall within the above-specified range.

The acrylic emulsion polymer (A) for use in the present invention may be obtained by emulsion polymerization of the constitutive monomers (monomer mixture) using an emulsifier and a polymerization initiator. In addition, a chain-transfer agent may be used so as to regulate the molecular weight of the acrylic emulsion polymer (A).

The emulsifier for use in emulsion polymerization to form the acrylic emulsion polymer (A) is preferably a reactive emulsifier including a radically polymerizable functional group introduced into the molecule (reactive emulsifier containing a radically polymerizable functional group). Specifically, the acrylic emulsion polymer (A) is preferably a polymer obtained by polymerization using a reactive emulsifier containing a radically polymerizable functional group in the molecule. Each of different emulsifiers may be used alone or in combination.

The reactive emulsifier containing a radically polymerizable functional group (hereinafter simply referred to as "reactive emulsifier") is an emulsifier containing at least one radically polymerizable functional group in the molecule (per molecule). Examples of the reactive emulsifier include, but are not limited to, reactive emulsifiers having radically polymerizable functional group(s) such as vinyl group, propenyl group, isopropenyl group, vinyl ether group (vinyloxy group), and allyl ether group (allyloxy group). Each of different reactive emulsifiers may be used alone or in combination. Such a reactive emulsifier, when used, is taken into the polymer, and this reduces staining derived from the emulsifier, thus being preferred.

Examples of the reactive emulsifiers include reactive emulsifiers each having a structure (or corresponding to the structure) of a nonionic-anionic emulsifier (anionic emulsifier having a nonionic hydrophilic group), except with an introduced radically polymerizable functional group (radically reactive group) such as propenyl group or allyl ether group. Exemplary nonionic-anionic emulsifiers include sodium polyoxyethylene alkyl ether sulfates, ammonium polyoxyethylene alkyl phenyl ether sulfates, sodium polyoxyethylene alkyl phenyl ether sulfates, and sodium polyoxyethylene alkyl sulfosuccinates. Hereinafter a reactive emulsifier having a structure corresponding to an anionic emulsifier, except with a radically polymerizable functional group being introduced, is referred to as an "anionic reactive emulsifier"; whereas a reactive emulsifier having a structure corresponding to a nonionic-anionic emulsifier, except with a radically polymerizable functional group being introduced, is referred to as a "nonionic-anionic reactive emulsifier."

Among them, anionic reactive emulsifiers are preferred, of which nonionic-anionic reactive emulsifiers are more preferred, because these emulsifiers will be taken into the polymer to improve less-staining properties. When the water-insoluble crosslinking agent (B) is a multifunctional epoxy crosslinking agent having an epoxy group, such an anionic reactive emulsifier, as having catalytic activity, helps the crosslinking agent to have higher reactivity. When no anionic reactive emulsifier is used, the crosslinking reaction may not be completed even through aging, and this may cause the pressure-sensitive adhesive layer to have an adhesive strength varying with time; and, in addition, unreacted carboxyl groups may cause the pressure-sensitive adhesive layer to have an increasing adhesive strength to the adherend with time. The anionic reactive emulsifiers are also preferred because they are taken into the polymer, thereby do not precipitate to the surface of the adherend, and cannot cause whitening staining, in contrast to quaternary ammonium compounds (e.g., see Japanese Unexamined Patent Application Publication (JP-A) No. 2007-31585) which are generally used as catalysts for epoxy crosslinking agents and precipitate to the surface of the adherend.

As the reactive emulsifiers, commercial products may also be used, and examples thereof include products under the trade name "ADEKA REASOAP SE-10N" (supplied by ADEKA CORPORATION), the trade name "ADEKA REASOAP SE-20N" (supplied by ADEKA CORPORATION), the trade name "ADEKA REASOAP SR-10" (supplied by ADEKA CORPORATION), the trade name "ADEKA REASOAP SR-20" (supplied by ADEKA CORPORATION), the trade name "AQUALON HS-10" (supplied by Dai-ichi Kogyo Seiyaku Co., Ltd.), the trade name "AQUALON HS-05" (supplied by Dai-ichi Kogyo Seiyaku Co., Ltd.), the trade name "AQUALON HS-1025" (supplied by Dai-ichi Kogyo Seiyaku Co., Ltd.), and the trade name "LATEMUL PD-104" (supplied by Kao Corporation).

The emulsifier for use herein is preferably one having a $SO_4^{2-}$ ion concentration of 100 $\mu$g/g or less, from which impurity ions have been removed, because such impurity ions may become a problem. In the case of an anionic emulsifier, an ammonium salt emulsifier is desirably used. Impurities may be removed from the emulsifier according to a suitable

process such as a process using an ion-exchange resin, a membrane separation process, or a process of precipitating impurities using an alcohol and removing the precipitates by filtration.

The reactive emulsifier may be blended (used) in an amount of preferably from 0.1 to 10 parts by weight, more preferably from 0.5 to 6 parts by weight, furthermore preferably from 1 to 4.5 parts by weight, and most preferably from 1 to 3 parts by weight, per 100 parts by weight of the total amount of constitutive monomers (total constitutive monomers) constituting the acrylic emulsion polymer (A). The reactive emulsifier, if used in an amount of more than 10 parts by weight, may cause the pressure-sensitive adhesive (pressure-sensitive adhesive layer) to have an insufficient cohesive strength, resulting in increased staining to the adherend or resulting in contamination of the emulsifier into the adherend. In contrast, the reactive emulsifier, if used in an amount of less than 0.1 part by weight, may not help to maintain stable emulsification.

The polymerization initiator for use in emulsion polymerization to form the acrylic emulsion polymer (A) is not limited, and examples of such polymerization initiators usable herein include azo polymerization initiators such as 2,2'-azobisisobutyronitrile, 2,2'-azobis(2-amidinopropane) dihydrochloride, 2,2'-azobis[2-(5-methyl-2-imidazolin-2-yl)propane] dihydrochloride, 2,2-azobis(2-methylpropionamidine) disulfate, and 2,2'-azobis (N,N'-dimethyleneisobutylamidine); persulfate polymerization initiators such as potassium persulfate and ammonium persulfate; peroxide polymerization initiators such as benzoyl peroxide, t-butyl hydroperoxide, and hydrogen peroxide; redox initiators each including a peroxide and a reducing agent, such as redox polymerization initiators using a peroxide and ascorbic acid in combination (e.g., a hydrogen peroxide solution and ascorbic acid in combination), those using a peroxide and an iron (II) salt in combination (e.g., a hydrogen peroxide solution and an iron (II) salt in combination), and those using a persulfate and sodium hydrogen sulfite in combination.

The amount of the polymerization initiator to be incorporated (to be used) may be determined as appropriate according typically to the types of the initiator and the constitutive monomers and is not limited, but is preferably from 0.01 to 1 part by weight, and more preferably from 0.02 to 0.5 part by weight, per 100 parts by weight of the total amount of constitutive monomers (total constitutive monomers) constituting the acrylic emulsion polymer (A).

Polymerization to form the acrylic emulsion polymer (A) may employ a chain-transfer agent so as to regulate the molecular weight of the acrylic emulsion polymer (A) . The chain-transfer agent is not limited, can be any of known or customary chain-transfer agents, and examples thereof include lauryl mercaptan, glycidyl mercaptan, mercaptoacetic acid, 2-mercaptoethanol, thioglycolic acid, 2-ethylhexyl thioglycolate, and 2,3-dimercapto-1-propanol. Each of different chain-transfer agents may be used alone or in combination. The chain-transfer agent(s) may be incorporated (used) in an amount of preferably from 0.001 to 0.5 part by weight, per 100 parts by weight of the total amount of constitutive monomers (total constitutive monomers) constituting the acrylic emulsion polymer (A).

Emulsion polymerization of the acrylic emulsion polymer (A) may be performed by any process not limited, such as regular batch polymerization, continuous dropping polymerization, or portion-wise dropping polymerization. From the viewpoint of less staining (improving less-staining properties), the emulsion polymerization is preferably performed according to batch polymerization at a low temperature (e.g., 55°C or lower, and more preferably 30°C or lower). This is probably because, polymerization, when performed under these conditions, is liable to give a polymer including high-molecular-weight components in large amounts with less amounts of low-molecular-weight components, and this may reduce staining.

The acrylic emulsion polymer (A) is a polymer including, as essential constitutional units, constitutional units derived from the (meth)acrylic alkyl ester, and constitutional units derived from the carboxyl-containing unsaturated monomer. The constitutional units derived from the (meth)acrylic alkyl ester are contained in the acrylic emulsion polymer (A) in a content of preferably from 70 to 99.5 percent by weight, more preferably from 85 to 99 percent by weight, and furthermore preferably from 91 to 98 percent by weight. The constitutional units derived from the carboxyl-containing unsaturated monomer are contained in the acrylic emulsion polymer (A) in a content of preferably from 0.5 to 10 percent by weight, more preferably from 1 to 5 percent by weight, and furthermore preferably from 2 to 4 percent by weight.

The acrylic emulsion polymer (A) has a solvent-insoluble content (content of solvent-insoluble matter, also referred to as "gel fraction") of preferably 70% (percent by weight) or more, more preferably 75 percent by weight or more, and furthermore preferably 80 percent by weight or more. The acrylic emulsion polymer (A), if having a solvent-insoluble content of less than 70 percent by weight, may contain large amounts of low-molecular-weight components, such large amounts of low-molecular-weight components may not be sufficiently reduced and may thereby remain in the pressure-sensitive adhesive layer by the action of crosslinking alone. This may cause adherend staining derived typically from low-molecular-weight components or may cause the pressure-sensitive adhesive layer to have an excessively high adhesive strength. The solvent-insoluble content may be controlled by choosing or setting the polymerization initiator, reaction temperature, and types of the emulsifier and constitutive monomers. Though not limited, the upper limit of the solvent-insoluble content is, for example, about 99 percent by weight.

As used herein the "solvent-insoluble content" of the acrylic emulsion polymer (A) refers to a value as determined by calculation according to the following "method for measuring solvent-insoluble content."

Method for Measuring Solvent-Insoluble Content

About 0.1 g of the acrylic emulsion polymer (A) is sampled to give a specimen, the specimen is covered by a porous tetrafluoroethylene sheet (supplied by Nitto Denko Corporation under the trade name "NTF1122") having an average pore size of 0.2 μm, tied with a kite string, the weight of the resulting article is measured and defined as a "weight before immersion." The weight before immersion is the total weight of the acrylic emulsion polymer (A) (the sampled specimen), the tetrafluoroethylene sheet, and the kite string. Independently, the total weight of the tetrafluoroethylene sheet and the kite string is measured and defined as a tare weight.
Next, the specimen acrylic emulsion polymer (A) covered by the tetrafluoroethylene sheet and tied with the kite string (this article is hereinafter referred to as "sample") is placed in a 50-ml vessel filled with ethyl acetate, and left stand therein at 23°C for 7 days. The sample (after treatment with ethyl acetate) is retrieved from the vessel, transferred to an aluminum cup, dried in a drier at 130°C for 2 hours to remove ethyl acetate, and the weight of the resulting sample is measured and defined as a weight after immersion.
The solvent-insoluble content is calculated according to the following equation:

$$\text{Solvent-insoluble content (percent by weight)} = (a-b)/(c-b) \times 100 \quad (1)$$

wherein "a" represents the weight after immersion; "b" represents the tare weight; and "c" represents the weight before immersion.

[Water-Insoluble Crosslinking Agent (B)]

The water-insoluble crosslinking agent (B) for use in the pressure-sensitive adhesive composition of the present invention is a water-insoluble compound and is a compound having two or more (e.g., two to six) functional groups reactive with carboxyl group (hereinafter also referred to as carboxyl-reactive functional groups) in the molecule (per molecule). Though not critical, the number of such carboxyl-reactive functional groups per molecule is preferably from 3 to 5. With an increasing number of carboxyl-reactive functional groups per molecule, the pressure-sensitive adhesive composition undergoes denser crosslinking, specifically, the polymer constituting the pressure-sensitive adhesive layer has a denser crosslinking structure. This enables the prevention of wet spread of the pressure-sensitive adhesive layer after its formation. In addition, such dense crosslinking structure constrains the polymer constituting the pressure-sensitive adhesive layer and thereby prevents increase in adhesive strength between the pressure-sensitive adhesive layer and the adherend with time due to segregation of the functional groups (carboxyl groups) in the pressure-sensitive adhesive layer to the surface in contact with the adherend. In contrast, the water-insoluble crosslinking agent (B), if having a number of carboxyl-reactive functional groups per molecule of more than 6, may cause the formation of a gelled substance.
Exemplary carboxyl-reactive functional groups to be contained in the water-insoluble crosslinking agent (B) include, but are not limited to, epoxy groups, isocyanate groups, and carbodiimide groups. Among them, epoxy groups are preferred from the viewpoint of reactivity. Of such epoxy groups, glycidylamino group is more preferred, because the glycidylamino group is highly reactive, thereby less causes a substance unreacted in the crosslinking reaction to remain, thus contributes to less-staining properties, and prevents increase with time in adhesive strength to the adherend due to the presence of unreacted carboxyl groups in the pressure-sensitive adhesive layer. Specifically, the water-insoluble crosslinking agent (B) is preferably any of epoxy crosslinking agents each having an epoxy group, of which crosslinking agents each having a glycidylamino group (glycidylamino crosslinking agents) are more preferred. Though not critical, the water-insoluble crosslinking agent (B), when being an epoxy crosslinking agent (particularly glycidylamino crosslinking agent), contains epoxy groups (particularly glycidylamino groups) in a number of preferably 2 or more (e.g., from 2 to 6), and more preferably from 3 to 5 per molecule.
The water-insoluble crosslinking agent (B) is a water-insoluble compound. As used herein the term "water-insoluble" refers to that the compound (crosslinking agent) has a solubility at 25°C in 100 parts by weight of water (weight of the compound (crosslinking agent) soluble in 100 parts by weight of water) of 5 parts by weight or less. The solubility is preferably 3 parts by weight or less, and more preferably 2 parts by weight or less. Such a water-insoluble crosslinking agent, when used, hardly causes whitening staining and thereby helps the pressure-sensitive adhesive layer to have improved less-staining properties. The whitening staining is caused on the adherend in a high-humidity environment by a crosslinking agent which has not undergone crosslinking and remains in the resulting polymer. Crosslinking, when performed by using a water-soluble crosslinking agent alone as a crosslinking agent, tends to cause whitening staining in a high-humidity environment, because a residual crosslinking agent is liable to be dissolved in water and to migrate into the adherend. In addition, a water-insoluble crosslinking agent more contributes to the crosslinking reaction (reaction

with carboxyl group) and more effectively suppresses increase in adhesive strength with time, as compared to a water-soluble crosslinking agent. A water-insoluble crosslinking agent has high reactivity in a crosslinking reaction, thereby allows the crosslinking reaction to proceed rapidly during aging, and suppresses increase in adhesive strength to the adherend with time. Such increase in adhesive strength is caused by unreacted carboxyl groups in the pressure-sensitive adhesive layer.

The solubility of the crosslinking agent in water may for example be measured in the following manner.

Method for Measuring Solubility in Water

Water (25°C) and the crosslinking agent in an equal weight are mixed with a stirrer at 300 revolutions per minute (rpm) for 10 minutes, and the mixture is separated into an aqueous phase and an oily phase by centrifugal separation. Next, the aqueous phase is collected, dried at 120°C for 1 hour, a weight loss on drying is determined, from which a non-volatile content (weight of non-volatile components in parts by weight per 100 parts by weight of water) in the aqueous phase is determined.

Specific examples of the water-insoluble crosslinking agent (B) include glycidylamino crosslinking agents such as 1,3-bis(N,N-diglycidylaminomethyl)cyclohexane (e.g., a product supplied by Mitsubishi Gas Chemical Company, Inc. under the trade name "TETRAD-C") [having a solubility of 2 parts by weight or less per 100 parts by weight of water at 25°C], 1,3-bis(N,N-diglycidylaminomethyl)benzene (e.g., a product supplied by Mitsubishi Gas Chemical Company, Inc. under the trade name "TETRAD-X") [having a solubility of 2 parts by weight or less per 100 parts by weight of water at 25°C]; and other epoxy crosslinking agents such as Tris (2,3-epoxypropyl)isocyanurate (e.g., a product supplied by Nissan Chemical Industries, Ltd. under the trade name "TEPIC-G") [having a solubility of 2 parts by weight or less per 100 parts by weight of water at 25°C].

Incorporation of the water-insoluble crosslinking agent (B) during the preparation of the pressure-sensitive adhesive composition of the present invention may be performed by adding (incorporating) the water-insoluble crosslinking agent (B) as intact, or by adding the water-insoluble crosslinking agent (B) after being dissolved in and/or diluted with an organic solvent. In the latter case, however, the amount of the organic solvent is preferably minimized. Addition of the water-insoluble crosslinking agent (B) after being emulsified with an emulsifier is not preferred, because the emulsifier tends to bleed out and to cause staining (particularly whitening staining).

The amount (content in the pressure-sensitive adhesive composition of the present invention) of the water-insoluble crosslinking agent(s) (B) is preferably such that the number of moles of carboxyl-reactive functional groups of the water-insoluble crosslinking agent(s) (B) be from 0.3 to 1.3 moles per 1 mole of carboxyl groups of the carboxyl-containing unsaturated monomer(s) used as a constitutive monomer for the acrylic emulsion polymer (A). Specifically, the ratio [(carboxyl-reactive functional groups)/(carboxyl groups)] (molar ratio) of the "total number of moles of carboxyl-reactive functional groups in total waster-insoluble crosslinking agents (B)" to the "total number of moles of carboxyl groups in total carboxyl-containing unsaturated monomers used as constitutive monomers for the acrylic emulsion polymer (A)" is preferably from 0.3 to 1.3, more preferably from 0.4 to 1.1, and furthermore preferably from 0.5 to 1.0. When the ratio [(carboxyl-reactive functional groups)/(carboxyl groups)] is less than 0.3, unreacted carboxyl groups may remain in a large amount in the pressure-sensitive adhesive layer, and this may cause increase in adhesive strength with time due to interactions between the carboxyl groups and the adherend. In contrast, if the ratio is more than 1.3, unreacted water-insoluble crosslinking agent(s) (B) may remain in a large amount in the pressure-sensitive adhesive layer, and this may cause appearance defects.

Particularly when the water-insoluble crosslinking agent (B) is an epoxy crosslinking agent, the ratio [(epoxy groups)/(carboxyl groups)] (molar ratio) is preferably from 0.3 to 1.3, more preferably from 0.4 to 1.1, and furthermore preferably from 0.5 to 1.0, where the carboxyl groups are carboxyl groups of the carboxyl-containing unsaturated monomer(s) used as a constitutive monomer for the acrylic emulsion polymer (A). When the water-insoluble crosslinking agent (B) is a glycidylamino crosslinking agent, the ratio [(glycidylamino groups)/(carboxyl groups)] (molar ratio) preferably falls within the above range, where the carboxyl groups are carboxyl groups of the carboxyl-containing unsaturated monomer(s) used as a constitutive monomer for the acrylic emulsion polymer (A).

For example, when a water-insoluble crosslinking agent (B) having a functional-group equivalent of carboxyl-reactive functional groups of 110 (g/eq) is added (incorporated) in an amount of 4 grams to the pressure-sensitive adhesive composition, the number of moles of carboxyl-reactive functional groups possessed by the water-insoluble crosslinking agent (B) may for example be calculated according to the following equation:

Number of moles of carboxyl-reactive functional groups of water-insoluble crosslinking agent (B) = [Amount of water-insoluble crosslinking agent (B) to be added (incorporated)]/[Functional-group equivalent] = 4/110

Further for example, when an epoxy crosslinking agent having an epoxy equivalent of 110 (g/eq) is added (incorporated) in an amount of 4 grams as the water-insoluble crosslinking agent (B), the number of moles of epoxy groups of the epoxy crosslinking agent may for example be calculated according to the following equation:

Number of moles of epoxy groups of epoxy crosslinking agent = [Amount of epoxy crosslinking agent to be added (incorporated)]/[Epoxy equivalent] = 4/110

[Carboxylic-Acid-Containing Acrylic Polymer (C)]

The carboxylic-acid-containing acrylic polymer (C) in the pressure-sensitive adhesive composition of the present invention is a polymer formed from a (meth)acrylic acid (either acrylic acid or methacrylic acid, or both) as an essential constitutive monomer.

The total amount of acrylic acid and methacrylic acid (total sum of the acrylic acid content and the methacrylic acid content (total content)) is typically 11 percent by weight or more (e.g., from 11 to 100 percent by weight), preferably 21 percent by weight or more (e.g., from 21 to 95 percent by weight), more preferably 31 percent by weight or more (e.g., from 31 to 90 percent by weight), and furthermore preferably 41 percent by weight or more, and most preferably 45 percent by weight or more, based on the total amount (100 percent by weight) of constitutive monomers constituting the carboxylic-acid-containing acrylic polymer (C). If the total content of acrylic acid and methacrylic acid is less than 11 percent by weight, sufficient thickening effects may not be obtained, and this may not provide an effect of suppressing dimple defects derived from the water-insoluble crosslinking agent.

Constitutive monomers constituting the carboxylic-acid-containing acrylic polymer (C) preferably further contain a (meth)acrylic ester in addition to (meth)acrylic acid. Though not limited, examples of the (meth)acrylic ester include methyl methacrylate, ethyl (meth)acrylate, isopropyl (meth)acrylate, n-propyl (meth)acrylate, n-butyl (meth)acrylate, isobutyl (meth)acrylate, hexyl (meth)acrylate, cyclohexyl (meth)acrylate, 2-hydroxyethyl (meth)acrylate, 2-hydroxypropyl (meth)acrylate, polyethylene glycol mono (meth)acrylates, and polypropylene glycol mono (meth)acrylates.

The constitutive monomers constituting the carboxylic-acid-containing acrylic polymer (C) may further include one or more additional monomers, such as crotonic acid, maleic acid, fumaric acid, itaconic acid, citraconic acid, maleic anhydride, acrylonitrile, (meth)acrylamide, N-methylolacrylamide, and glycidyl methacrylate.

The carboxylic-acid-containing acrylic polymer (C) may be prepared by polymerizing the above-mentioned monomer component(s) according to a known or customary polymerization process. Exemplary polymerization processes for the carboxylic-acid-containing acrylic polymer (C) include solution polymerization, emulsion polymerization, batch polymerization, and polymerization through irradiation with an active energy ray (activo-energy-ray polymerization) .

The carboxylic-acid-containing acrylic polymer (C) is a polymer including constitutional units derived from (meth)acrylic acid as essential constitutional units. The carboxylic-acid-containing acrylic polymer (C) may have a total amount of constitutional units derived from acrylic acid and constitutional units derived from methacrylic acid (total sum of the content of constitutional units derived from acrylic acid and the content of constitutional units derived from methacrylic acid (total content)) of 11 percent by weight or more (e.g., from 11 to 100 percent by weight), preferably 21 percent by weight or more (e.g., from 21 to 95 percent by weight), more preferably 31 percent by weight or more (e.g., from 31 to 90 percent by weight), and furthermore preferably 41 percent by weight or more, and most preferably 45 percent by weight or more. The carboxylic-acid-containing acrylic polymer (C) preferably further includes constitutional units derived from a (meth)acrylic ester. The total amount of constitutional units derived from acrylic acid and constitutional units derived from methacrylic acid may be measured typically by nuclear magnetic resonance spectrometry (NMR), gas chromatography-mass spectrometry (GC/MS), or Fourier transform infrared spectroscopy (FT-IR).

Though not critical, the carboxylic-acid-containing acrylic polymer (C) has a number-average molecular weight of preferably from 10,000 to 4,000,000, and more preferably from 10,000 to 2,000,000, from the viewpoint of less-staining properties.

Commercial products may be used as the carboxylic-acid-containing acrylic polymer (C). Specifically, exemplary commercial products usable herein include thickeners each containing a carboxylic-acid-containing acrylic polymer (C), such as "Aron A-7070", "Aron A-7075", "Aron B-300K", and "Aron B-500" each supplied by Toagosei Co., Ltd.; "SN-Thickener 630", "SN-Thickener 634", and "SN-Thickener 640" each supplied by SAN NOPCO LIMITED; and "PRIMAL ASE-60" supplied by Rohm and Haas Company.

The carboxylic-acid-containing acrylic polymer (C) , as being incorporated into the pressure-sensitive adhesive composition of the present invention, helps the pressure-sensitive adhesive composition to have a higher viscosity and to be resistant to formation of dimple defects caused by the water-insoluble crosslinking agent, thus suppressing defects formation.

The carboxylic-acid-containing acrylic polymer (C) is contained in an amount (content in the pressure-sensitive adhesive composition of the present invention) of preferably from 0.01 to 10 parts by weight, more preferably from 0.1 to 7 parts by weight, and furthermore preferably from 0.5 to 5 parts by weight, per 100 parts by weight of the acrylic emulsion polymer (A). The carboxylic-acid-containing acrylic polymer (C), if in a content of less than 0.01 part by weight, may not sufficiently prevent appearance defects (poor appearance) due to dimple defects caused by the water-insoluble crosslinking agent. In contrast, the carboxylic-acid-containing acrylic polymer (C), if in a content of more than 10 parts by weight, may cause the pressure-sensitive adhesive composition to have an excessively high viscosity, and this may tend to cause troubles upon coating of the pressure-sensitive adhesive (composition).

[Removable Water-Dispersible Acrylic Pressure-Sensitive Adhesive Composition and Pressure-Sensitive Adhesive Sheet]

The removable water-dispersible acrylic pressure-sensitive adhesive composition according to the present invention contains an acrylic emulsion polymer (A), a water-insoluble crosslinking agent (B), and a carboxylic-acid-containing acrylic polymer (C) as essential components, as is described above. The composition may further contain another crosslinking agent than the water-insoluble crosslinking agent (B) (hereinafter also referred to as "additional crosslinking agent(s)"), and other additives according to necessity.

The pressure-sensitive adhesive composition of the present invention is a water-dispersible pressure-sensitive adhesive composition. As used herein the term "water-dispersible" refers to that the substance in question is capable of dispersing in an aqueous medium. Specifically, the pressure-sensitive adhesive composition of the present invention is a pressure-sensitive adhesive composition capable of dispersing in an aqueous medium. The aqueous medium is a medium (dispersion medium) including water as an essential component and may be composed of water alone or a mixture of water and a water-soluble (miscible) organic solvent. The pressure-sensitive adhesive composition of the present invention may also be in the form of a fluid dispersion using, for example, the aqueous medium.

The pressure-sensitive adhesive composition of the present invention may further contain another crosslinking agent (additional crosslinking agent) than the water-insoluble crosslinking agent (B). The additional crosslinking agent is not limited but is preferably a multifunctional hydrazide crosslinking agent. A multifunctional hydrazide crosslinking agent, when used, helps the pressure-sensitive adhesive composition to give a pressure-sensitive adhesive layer being improved in removability, adhesiveness, and anchoring capability with respect to the substrate. The multifunctional hydrazide crosslinking agent (hereinafter also simply referred to as "hydrazide crosslinking agent") is a compound having at least two hydrazide groups in the molecule (per molecule). The number of hydrazide groups per molecule is preferably 2 or 3, and more preferably 2. Exemplary compounds preferably used as the hydrazide crosslinking agent include, but are not limited to, dihydrazide compounds such as oxalic acid dihydrazide, malonic acid dihydrazide, succinic acid dihydrazide, glutaric acid dihydrazide, adipic acid dihydrazide, pimelic acid dihydrazide, suberic acid dihydrazide, azelaic acid dihydrazide, sebacic acid dihydrazide, dodecanedioic acid dihydrazide, phthalic acid dihydrazide, isophthalic acid dihydrazide, terephthalic acid dihydrazide, 2,6-naphthalenedicarboxylic acid dihydrazide, naphthalic acid dihydrazide, acetonedicarboxylic acid dihydrazide, fumaric acid dihydrazide, maleic acid dihydrazide, itaconic acid dihydrazide, trimellitic acid dihydrazide, 1,3,5-benzenetricarboxylic acid dihydrazide, pyromellitic acid dihydrazide, and aconitic acid dihydrazide. Among them, adipic acid dihydrazide and sebacic acid dihydrazide are particularly preferred. Each of different hydrazide crosslinking agents may be used alone or in combination.

The hydrazide crosslinking agent may be a commercial product such as a product supplied by Tokyo Chemical Industry Co., Ltd. under the trade name "Adipic Acid Dihydrazide (Reagent)" and a product supplied by Wako Pure Chemical Industries, Ltd. under the trade name "Adipoyl Dihydrazide (Reagent)."

The amount (content in the pressure-sensitive adhesive composition of the present invention) of the hydrazide crosslinking agent is preferably from 0.025 to 2.5 moles, more preferably from 0.1 to 2 moles, and furthermore preferably from 0.2 to 1.5 moles, per 1 mole of keto groups of the keto-containing unsaturated monomer used as a constitutive

monomer for the acrylic emulsion polymer (A). The hydrazide crosslinking agent, if in an amount of less than 0.025 mole, may not exhibit sufficient effects of its addition, and this may cause the pressure-sensitive adhesive layer or pressure-sensitive adhesive sheet to be peeled off heavily and may tend to cause whitening staining of the adherend due to low-molecular-weight components remained in the polymer constituting the pressure-sensitive adhesive layer. In contrast, the hydrazide crosslinking agent, if in an amount of more than 2.5 moles, may cause staining due to an unreacted crosslinking agent component.

From the viewpoint of less-staining properties, the pressure-sensitive adhesive composition of the present invention is preferably not incorporated with quaternary ammonium salts, and more preferably not incorporated with quaternary ammonium compounds. Accordingly, the pressure-sensitive adhesive composition of the present invention preferably contains substantially no quaternary ammonium salt, and more preferably contains substantially no quaternary ammonium compound. These compounds are generally used typically as catalysts for improving reactivity of epoxy crosslinking agents. These compounds, however, are not integrated into the polymer constituting the pressure-sensitive adhesive layer, are capable of migrating freely in the pressure-sensitive adhesive layer, and are tend to precipitate to the adherend surface. For these reasons, these compounds, if contained in the pressure-sensitive adhesive composition, may often cause whitening staining and may thereby impede development of less-staining properties. Specifically, the pressure-sensitive adhesive composition of the present invention has a quaternary ammonium salt content of preferably less than 0.1 percent by weight, more preferably less than 0.01 percent by weight, and furthermore preferably less than 0.005 percent by weight, based on the total amount (non-volatile content) of the pressure-sensitive adhesive composition. In addition, the pressure-sensitive adhesive composition preferably has a quaternary ammonium compound content falling within the above-specified range.

Specifically, exemplary quaternary ammonium salts include, but are not limited to, compounds each represented by the following formula:

[Chem. 1]

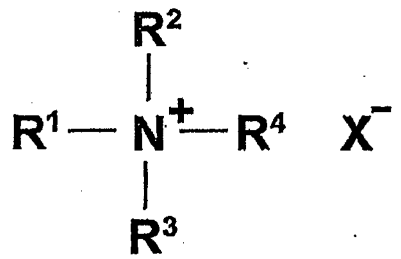

In the formula, $R^1$, $R^2$, $R^3$, and $R^4$ each independently represent not hydrogen atom but an alkyl group, an aryl group, or a group derived from them (e.g., a substituted alkyl group or aryl group); and $X^-$ represents a counter ion.

Examples of the quaternary ammonium salt and quaternary ammonium compound include, but are not limited to, alkylammonium hydroxides such as tetramethylammonium hydroxide (TMAH), tetraethylammonium hydroxide, tetrapropylammonium hydroxide, tetrabutylammonium hydroxide, and salts of them; arylammonium hydroxides such as tetraphenylammonium hydroxide, and salts of them; and bases and salts of them, which bases including, as a cation, any of trilaurylmethylammonium ion, didecyldimethylammonium ion, dicocoyldimethylammonium ion, distearyldimethylammonium ion, dioleyldimethylammonium ion, cetyltrimethylammonium ion, stearyltrimethylammonium ion, behenyltrimethylammonium ion, cocoylbis (2-hydroxyethyl)methylammonium ion, polyoxyethylene(15) cocostearylmethylammonium ion, oleylbis (2-hydroxyethyl)methylammonium ion, cocobenzyldimethylammonium ion, laurylbis(2-hydroxyethyl)methylammonium ion, and decylbis(2-hydroxyethyl)methylammonium ion.

Also from the viewpoint of less-staining properties, the pressure-sensitive adhesive composition of the present invention is preferably not incorporated with tertiary amines and imidazole compounds, as with the quaternary ammonium salts (or quaternary ammonium compounds). Such tertiary amines and imidazole compounds are generally used typically as catalyst for improving reactivity of epoxy crosslinking agents. Accordingly, the pressure-sensitive adhesive composition of the present invention preferably contains substantially no tertiary amine and substantially no imidazole compound. Specifically, the pressure-sensitive adhesive composition of the present invention has a content of tertiary amines and imidazole compounds (total content of tertiary amines and imidazole compounds) of preferably less than 0.1 percent by weight, more preferably less than 0.01 percent by weight, and furthermore preferably less than 0.005 percent by weight, based on the total amount (non-volatile content) of the pressure-sensitive adhesive composition.

Exemplary tertiary amines include tertiary amine compounds such as triethylamine, benzyldimethylamine, and

α -methylbenzyl-dimethylamine. Exemplary imidazole compounds include 2-methylimidazole, 2-heptadecylimidazole, 2-phenylimidazole, 4-ethylimidazole, 4-dodecylimidazole, 2-phenyl-4-hydroxymethylimidazole, 2-ethyl-4-hydroxymethylimidazole, 1-cyanoethyl-4-methylimidazole, and 2-phenyl-4,5-dihydroxymethylimidazole.

In addition, the pressure-sensitive adhesive composition of the present invention preferably contains substantially no hydrophobic silica. Specifically, the pressure-sensitive adhesive composition of the present invention has a hydrophobic silica content of preferably less than $5x\ 10^{-4}$ percent by weight, more preferably less than $1 \times 10^{-4}$ percent by weight, furthermore preferably less than $1 \times 10^{-5}$ percent by weight, and most preferably 0 percent by weight, based on the total amount (non-volatile content) of the pressure-sensitive adhesive composition. Hydrophobic silica, if contained in the pressure-sensitive adhesive composition, may form secondary aggregates, and the resulting silica particles (aggregates) may cause a defect (appearance defect). In addition, upon filtration of the pressure-sensitive adhesive composition typically through a filter, the filter may be clogged with the silica particles, resulting in insufficient production efficiency.

The pressure-sensitive adhesive composition of the present invention may further contain various additives within a range not adversely affecting less-staining properties, in addition to the above components. Exemplary additives include pigments, fillers, dispersing agents, plasticizers, stabilizers, antioxidants, ultraviolet absorbents, ultraviolet stabilizers, age inhibitors, and antiseptic agents.

The pressure-sensitive adhesive composition of the present invention may be prepared by mixing the acrylic emulsion polymer (A), the water-insoluble crosslinking agent (B), and the carboxylic-acid-containing acrylic polymer (C). Where necessary, additional crosslinking agents and other additives may be mixed. The mixing may be performed according to any known or customary technique for mixing an emulsion, but is preferably performed, for example, by stirring with a stirrer. Though stirring conditions are not limited, stirring is performed, for example, at a temperature (stirring temperature) of preferably from 10°c to 50°C, and preferably from 20°c to 35°C for a duration (stirring time) of preferably from 5 to 30 minutes, and more preferably from 10 to 20 minutes at a number of revolutions in stirring of preferably from 10 to 2000 rpm, and more preferably from 30 to 1000 rpm.

The pressure-sensitive composition thus obtained is applied to at least one side of a substrate (also referred to as a "base material" or "supporting substrate"), dried according to necessity to form a pressure-sensitive layer, and thereby yields a pressure-sensitive adhesive according to the present invention which is a pressure-sensitive adhesive sheet including a substrate and, on at least one side thereof, a pressure-sensitive adhesive layer from the pressure-sensitive adhesive composition of the present invention. Crosslinking its performed typically by heating the pressure-sensitive adhesive sheet after dehydration and drying in the drying step. The pressure-sensitive adhesive layer herein is preferably provided by a so-called direct application technique in which the pressure-sensitive adhesive composition is directly applied to the substrate surface, as described above. The direct application technique is preferred because the pressure-sensitive adhesive layer herein has a high solvent-insoluble content and, if formed by a transfer process, where a pressure-sensitive adhesive layer is once provided on a release film and then transferred onto the substrate, may not exhibit sufficient anchoring capability (adhesion) to the substrate.

Though not critical, the pressure-sensitive adhesive layer (after crosslinking) in the pressure-sensitive adhesive sheet according to the present invention has a thickness of preferably from 1 to 50 μm, more preferably from 1 to 35 μm, and furthermore preferably from 3 to 25 μm.

The pressure-sensitive adhesive layer (after crosslinking) in the pressure-sensitive adhesive sheet according to the present invention has a solvent-insoluble content (gel fraction) of preferably 90% (percent by weight) or more, and more preferably 95 percent by weight or more. The pressure-sensitive adhesive layer, if having a solvent-insoluble content of less than 90 percent by weight, may cause increased transfer of contaminants to the adherend to cause whitening staining or may have insufficient removability to cause heavy peeling off (insufficient removability). The solvent-insoluble content of the pressure-sensitive adhesive layer (after crosslinking) may be measured by the procedure as with the method for measuring the solvent-insoluble content of the acrylic emulsion polymer (A). Specifically, the solvent-insoluble content herein may be measured by the procedure corresponding to the "method for measuring the solvent-insoluble content" except that the term "acrylic emulsion polymer (A)" is read as "pressure-sensitive adhesive layer (after crosslinking)."

Though not critical, the pressure-sensitive adhesive layer (after crosslinking) in the pressure-sensitive adhesive sheet according to the present invention has an elongation at break (elongation at rupture) in a tensile test of preferably 200% or less, more preferably 150% or less, furthermore preferably 130% or less, still more preferably from 40% to 120%, and most preferably from 60% to 115%, from the viewpoint of degree of crosslinking of the pressure-sensitive adhesive layer. The elongation at break is an index of the degree of crosslinking of the pressure-sensitive adhesive layer and, if being 200% or less, the polymer constituting the pressure-sensitive adhesive layer may have a dense crosslinking structure. This prevents wet spread of the formed pressure-sensitive adhesive layer and suppresses increase in adhesive strength to the adherend with time. In addition, such dense crosslinking structure constrains the polymer constituting the pressure-sensitive adhesive layer and thereby prevents increase in adhesive strength to the adherend with time due to segregation of the functional groups (carboxyl groups) in the pressure-sensitive adhesive layer to the surface in contact

with the adherend.

Though not critical, the acrylic polymer (after crosslinking) constituting the pressure-sensitive adhesive layer in the pressure-sensitive adhesive sheet according to the present invention has a glass transition temperature of preferably from -70°C to -10°C, more preferably from -70°C to -20°C, furthermore preferably from -70°C to -40°C, and most preferably from -70°C to -60°C. The acrylic polymer, if having a glass transition temperature of higher than -10°C, may show insufficient adhesive strength and may thereby cause gap and/or separation typically upon working. The acrylic polymer, if having a glass transition temperature of lower than -70°C, may cause heavy peeling when peeled off at higher peel rates (at higher tensile speeds) and may thereby cause insufficient working efficiency. The glass transition temperature of the polymer (after crosslinking) may also be regulated typically by the monomer composition upon preparation of the acrylic emulsion polymer (A).

The substrate for use in the pressure-sensitive adhesive sheet according to the present invention is preferably a plastic substrate (e.g., a plastic film or plastic sheet) for allowing the pressure-sensitive adhesive sheet to have high transparency. Exemplary materials for plastic substrates include, but are not limited to, transparent resins including polyolefins (polyolefin resins) such as polypropylenes and polyethylenes; polyesters (polyester resins) such as poly(ethylene terephthalate)s (PETs); polycarbonates; polyamides; polyimides; acrylic resins; polystyrenes; acetate resins; poly(ether sulfone)s; and triacetylcellulose. Each of different resins may be used alone or in combination. Though not limited, polyester resins and polyolefin resins are preferred among these resins, of which PETs, polypropylenes, and polyethylenes are more preferred from the viewpoints of productivity and formability (moldability). Specifically, as the substrate, polyester films and polyolefin films are preferred, of which PET films, polypropylene films, and polyethylene films are more preferred. Though not limited, examples of the polypropylenes include homopolypropylenes as homopolymers; random polypropylenes as α-olefin random copolymers; and block polypropylenes as α-olefin block copolymers. Exemplary polyethylenes include low-density polyethylenes (LDPEs), high-density polyethylenes (HDPEs), and linear low-density polyethylenes (L-LDPEs). Each of these may be used alone or in combination. Though not critical, the substrate has a thickness of preferably from 10 to 150 μm, and more preferably from 30 to 100 μm.

The surface of the substrate where the pressure-sensitive adhesive layer is to be provided has preferably undergone an adhesion-promoting treatment such as acid treatment, base treatment, primer treatment, corona treatment, plasma treatment, or ultraviolet ray treatment typically for improving the adhesion to the pressure-sensitive adhesive layer. The pressure-sensitive adhesive sheet may further include an intermediate layer between the substrate and the pressure-sensitive adhesive layer. The intermediate layer has a thickness of preferably from 0.05 to 1 μm, and more preferably from 0.1 to 1 μm.

Though not critical, the pressure-sensitive adhesive sheet according to the present invention has an adhesive strength of preferably from 0.01 to 5 N/25 mm, more preferably from 0.02 to 3 N/25 mm, furthermore preferably from 0.03 to 2 N/25 mm, and most preferably from 0.04 to 1 N/25 mm at a tensile speed of 0.3 m/min with respect to a deflector plate (triacetylcellulose (TAC) plate) (one having an arithmetic mean surface roughness Ra of 50 nm or less). The adhesive strength is the peel strength measured in a 180-degree peel test upon peeling of the pressure-sensitive adhesive sheet which has been affixed to the deflector plate. The pressure-sensitive adhesive sheet, if having an adhesive strength of more than 5 N/25 mm, may become resistant to peeling off (removal) during the production processes typically of a deflector plate or a liquid crystal display device and may thereby cause insufficient productivity and handleability. The pressure-sensitive adhesive sheet, if having an adhesive strength of less than 0.01 N/25 mm, may suffer from gap or separation during the production processes and may not satisfactorily serve to protect the product as a surface-protecting pressure-sensitive adhesive sheet. The arithmetic mean surface roughness Ra may be measured typically by using "P-15" (stylus-type surface profilometer) supplied by KLA-Tencor Corporation. Though not limited, the surface roughness (arithmetic mean surface roughness Ra) may be measured in one scanning pass at a measurement length of 1000 μm and a scanning speed of 50 μm/second under a load of 2 mg.

The pressure-sensitive adhesive sheet according to the present invention satisfactorily less causes whitening staining of the adherend. This may be evaluated, for example, in the following manner. The pressure-sensitive adhesive sheet is affixed to a deflector plate (the trade name "SEG1425DUHC", supplied by Nitto Denko Corporation) at 0.25 MPa and 0.3 m/min, left stand at 80°C for 4 hours, and then removed from the deflector plate. The deflector plate after the removal of the pressure-sensitive adhesive sheet is further left stand in an ambient temperature of 23°C and relative humidity of 90% for 12 hours, and the surface thereof is observed. In this observation, it is preferred that no whitening is observed in the deflector plate surface. The pressure-sensitive adhesive sheet, if causing whitening of the adherend deflector plate under humid conditions (high-humidity conditions) after affixation and removal of the pressure-sensitive adhesive sheet, has insufficient less-staining properties to be used as a surface-protecting film for optical elements .

The pressure-sensitive adhesive sheet according to the present invention may be formed into a roll. In this case, the sheet may be wound as a roll while the pressure-sensitive adhesive layer is protected with a release film (separator). The pressure-sensitive adhesive sheet may have, on its backside (side opposite to the pressure-sensitive adhesive layer), a backing layer (e.g., release layer or antifouling layer) through a release treatment and/or an antifouling treatment typically with a release agent such as a silicone, fluorine-containing, long-chain alkyl, or fatty acid amide

release agent, or a silica powder. The pressure-sensitive adhesive sheet according to the present invention particularly preferably has a structure of [(pressure-sensitive adhesive layer)/(substrate)/(backing layer)].

The pressure-sensitive adhesive sheet according to the present invention more preferably has undergone an antistatic treatment. The antistatic treatment may be performed by a regular antistatic treatment process, is not limited, but may be performed typically by a process of providing an antistatic layer on the backside (side opposite to the pressure-sensitive adhesive layer) of the substrate or a process of incorporating a kneading-type antistatic agent (electrification preventing agent) into the substrate.

The antistatic layer may be provided typically by applying an antistatic agent alone, an antistatic resin containing the antistatic agent and a resin component, an electroconductive resin composition containing an electroconductive material and a resin component, or an electroconductive polymer; or by performing vapor deposition or plating of an electroconductive material.

Examples of the antistatic agent include cationic antistatic agents each having a cationic functional group (e.g., primary amine group, secondary amino group, or tertiary amino group), such as quaternary ammonium salts and pyridinium salts; anionic antistatic agents each having an anionic functional group, such as sulfonic acid salts, sulfuric ester salts, phosphonic acid salts, and phosphoric ester salts; amphionic antistatic agents such as alkylbetaines and derivatives thereof, imidazoline and derivatives thereof, and alanine and derivatives thereof; nonionic antistatic agents such as amino-alcohols and derivatives thereof, glycerol and derivatives thereof, and polyethylene glycols and derivatives thereof; as well as ionically conductive polymers obtained by polymerization or copolymerization of a monomer or monomers each having an ionically conductive group, as typified by the cationic antistatic agents, anionic antistatic agents, and amphionic antistatic agents.

Specifically, examples of the cationic antistatic agents include alkyltrimethylammonium salts; acylamidopropyltrimethylammonium methosulfates; alkylbenzylmethylammonium salts; acylcholine chlorides; (meth)acrylate copolymers having quaternary ammonium groups, such as poly(dimethylaminoethyl methacrylate)s; styrenic copolymers having quaternary ammonium groups, such as poly(vinylbenzyltrimethylammonium chloride)s; and diallylamine copolymers having quaternary ammonium groups, such as poly(diallyldimethylammonium chloride)s. Examples of the anionic antistatic agents include alkylsulfonic acid salts, alkylbenzenesulfonic acid salts, alkylsulfuric ester salts, alkylethoxysulfuric ester salts, alkylphosphoric ester salts, and sulfo-containing styrenic copolymers. Examples of the amphionic antistatic agents include alkylbetaines, alkylimidazolium betaines, and carbobetaine graft copolymers. The nonionic antistatic agents include, for example, fatty acid alkylolamides, di-(2-hydroxyethyl)alkylamines, polyoxyethylene alkylamines, fatty acid glycerol esters, polyoxyethylene glycol fatty acid esters, sorbitan fatty acid esters, polyoxysorbitan fatty acid esters, polyoxyethylene alkyl phenyl ethers, polyoxyethylene alkyl ethers, polyethylene glycols, polyoxyethylenediamines, copolymers each composed of a polyether, a polyester, and a polyamide, and methoxypolyethylene glycol (meth)acrylates.

Examples of the electroconductive polymers include polyanilines, polypyrroles, and polythiophenes.

Exemplary electroconductive materials include tin oxide, antimony oxide, indium oxide, cadmium oxide, titanium oxide, zinc oxide, indium, tin, antimony, gold, silver, copper, aluminum, nickel, chromium, titanium, iron, cobalt, copper iodide, and alloys or mixtures of them.

Examples of the resin component for use herein include general-purpose resins such as polyesters, acrylic resins, vinyl polymers, urethane resins, melamine resins, and epoxy resins. When the antistatic agent is a polymeric antistatic agent, the antistatic resin does not have to contain the resin component. The antistatic resin may further contain, as a crosslinking agent, a compound such as methylolated or alkylolated melamine, urea, glyoxal, or acrylamide compound, an epoxy compound, or an isocyanate compounds.

The antistatic layer may be formed through coating typically by diluting the antistatic resin, electroconductive polymer, or electroconductive resin composition with a solvent or dispersion medium such as an organic solvent or water to form a coating composition, and applying the coating composition to the substrate, followed by drying. Exemplary organic solvents include methyl ethyl ketone, acetone, ethyl acetate, tetrahydrofuran, dioxane, cyclohexanone, n-hexane, toluene, xylene, methanol, ethanol, n-propanol, and isopropanol. Each of these may be used alone or in combination. The coating may be performed according to a known coating procedure such as roll coating, gravure coating, reverse coating, roll brush coating, spray coating, air knife coating, impregnation and curtain coating.

Though not critical, the antistatic layer (antistatic resin layer, electroconductive polymer layer, or electroconductive resin composition layer) formed by coating has a thickness of preferably from 0.001 to 5 $\mu$m, and more preferably from 0.005 to 1 $\mu$m.

Exemplary procedures for the vapor deposition or plating of the electroconductive material include vacuum deposition, sputtering, ion plating, chemical vapor deposition, spray pyrolysis, chemical plating, and electroplating.

Though not critical, the antistatic layer (electroconductive material layer) formed by vapor deposition or plating has a thickness of preferably from 20 to 10000 angstroms, and more preferably from 50 to 5000 angstroms.

Any of the aforementioned antistatic agents may be suitably used as the kneading-type antistatic agent. The kneading-type antistatic agent is incorporated in an amount of preferably 20 percent by weight or less, and more preferably from 0.05 to 10 percent by weight, based on the total weight (100 percent by weight) of the substrate. The way to

incorporate is not limited, as long as the kneading-type antistatic agent can be uniformly mixed with, for example, a resin for use in a plastic substrate, and examples thereof generally include processes typically using a heating roll, Banbury mixer, press kneader, or double-screw kneader.

The pressure-sensitive adhesive composition of the present invention is a pressure-sensitive adhesive composition capable of forming a pressure-sensitive adhesive layer excellent in adhesiveness and removability (easy-peelability) and is used for the formation of a (removable) pressure-sensitive adhesive layer that is used in an application where the pressure-sensitive adhesive layer will be removed. Specifically, the pressure-sensitive adhesive sheet having a pressure-sensitive adhesive layer formed from the pressure-sensitive adhesive composition of the present invention is used in applications where the sheet will be removed. Exemplary applications include masking tapes such as masking tapes for protection or curing in construction, masking tapes for automobile painting, masking tapes for electronic components (e.g., lead frames and printed circuit boards), and masking tapes for sand blasting; surface-protecting films such as surface-protecting films for aluminum sash, surface-protecting films for optical plastics, surface-protecting films for optical glass, surface-protecting films for the protection of automobiles, and surface-protecting films for metal plates; pressure-sensitive adhesive tapes for production processes of semiconductor/electronic components, such as backgrinding tapes, pellicle-fixing tapes, dicing tapes, lead-frame-fixing tapes, cleaning tapes, dedusting tapes, carrier tapes, and cover tapes; packaging tapes for electronic appliances and electronic components; temporal tacking tapes upon transportation; binding tapes; and labels.

In addition, the pressure-sensitive adhesive sheet according to the present invention less suffers from appearance defects such as "dimples" of the pressure-sensitive adhesive layer and has a good appearance. The pressure-sensitive adhesive sheet, when used as being affixed to an adherend, does not cause staining, such as whitening staining, of the adherend and has excellent less-staining properties. For these reasons, the pressure-sensitive adhesive sheet according to the present invention is preferably used particularly for protecting the surface of optical elements (e.g., optical plastics, optical glass, and optical films) typically as a surface-protecting film for an optical element, in which satisfactory appearance characteristics and less-staining properties are required. Exemplary optical elements include deflector plates, retardation films, anti-reflective films, wave plates, compensation films, and brightness enhancing films for constituting panels typically of liquid crystal displays, organic electroluminescence (organic EL) displays, and field emission displays. However, the pressure-sensitive adhesive sheet can also be used for other applications not limited to the above ones and can be used typically for surface-protection, failure-prevention, removal typically of foreign matter, or masking upon production of micro fabricated components typically of semiconductors (semiconductor devices), circuits, printed circuit boards, masks, and lead frames.

## Examples

The present invention will be illustrated in further detail with reference to several working examples below. It should be noted, however, that these examples are never construed to limit the scope of the present invention.

### Example 1

#### Preparation of Acrylic Emulsion Polymer (A)

A monomer emulsion was prepared by placing in a vessel 90 parts by weight of water, constitutive monomers and an emulsifier in amounts given in Table 1, and mixing them with stirring using a homomixer.
Next, 50 parts by weight of water, 0.01 part by weight of a polymerization initiator (ammonium persulfate), and the above-prepared monomer emulsion in an amount corresponding to 10 percent by weight thereof were placed in a reactor equipped with a condenser, a nitrogen inlet tube, a thermometer, and a stirrer, and these were subjected to emulsion polymerization with stirring at 75°C for 1 hour. Thereafter 0.05 part by weight of the polymerization initiator (ammonium persulfate) was further added, and all the residual monomer emulsion (in an amount corresponding to 90 percent by weight) was added thereto with stirring over 3 hours, followed by a reaction at 75°C for 3 hours. Next, this was cooled to 30°C, combined with a 10 percent by weight ammonia water to be adjusted to pH 8, and thereby yielded a water dispersion of acrylic emulsion polymer (A) having a concentration of the acrylic emulsion polymer (A) of 42 percent by weight.

#### Preparation of Removable Water-Dispersible Acrylic Pressure-Sensitive Adhesive Composition

A removable water-dispersible acrylic pressure-sensitive adhesive composition was prepared by adding 3 parts by weight of an epoxy crosslinking agent [supplied by Mitsubishi Gas Chemical Company, Inc. under the trade name "TETRAD-C", 1,3-bis (N,N-diglycidylaminomethyl) cyclohexane, epoxy equivalents: 110, number of functional groups: 4] as a water-insoluble crosslinking agent and 20 parts by weight of an aqueous solution to 238 parts by weight (100

parts by weight of the acrylic emulsion polymer) of the above-prepared (42 percent by weight) water dispersion of the acrylic emulsion polymer (A), and mixing them with stirring using the stirrer at 23°C, at 300 rpm for 10 minutes. The aqueous solution had been prepared by diluting a thickener containing a carboxylic-acid-containing acrylic polymer (C) [supplied by SAN NOPCO LIMITED under the trade name "SN-Thickener 630", active component: 30 percent by weight] with water so as to have an active component content of 5 percent by weight. The column "[Number of moles of carboxyl-reactive functional group]/[number of moles of carboxyl group]" in Table 1 shows the ratio of total number of moles of carboxyl-reactive functional groups in total water-insoluble crosslinking agents to the total number of moles of carboxyl groups in total carboxyl-containing unsaturated monomers used as constitutive monomers for the acrylic emulsion polymer (A).

Formation of Pressure-Sensitive Adhesive Layer and Production of Pressure-Sensitive Adhesive Sheet

Next, the above-prepared removable water-dispersible acrylic pressure-sensitive adhesive composition was applied to a corona-treated surface of a PET film (supplied by Mitsubishi Plastics, Inc. under the trade name "T100N38", thickness: 38 μm) so as to have a dry thickness of 15 μm, using an applicator supplied by Tester Sangyo Co., Ltd. The article was dried in an oven with internal air (hot air) circulation at 120°C for 2 minutes, aged at 50°C for 3 days, and thereby yielded a pressure-sensitive adhesive sheet.

Examples 2 to 8

A series of removable water-dispersible acrylic pressure-sensitive adhesive compositions and a series of pressure-sensitive adhesive sheets were prepared by the procedure of Example 1, except for using a different type of a thickener containing a carboxylic-acid-containing acrylic polymer (C) as given in Table 1.

Comparative Example 1

A removable water-dispersible acrylic pressure-sensitive adhesive composition and a pressure-sensitive adhesive sheet were prepared by the procedure of Example 1, except for not using the thickener containing a carboxylic-acid-containing acrylic polymer (C) (aqueous solution of the thickener containing a carboxylic-acid-containing acrylic polymer (C)), as shown in Table 1.

Comparative Example 2

A removable water-dispersible acrylic pressure-sensitive adhesive composition and a pressure-sensitive adhesive sheet were prepared by the procedure of Example 1, except for using, instead of the aqueous solution of the thickener containing a carboxylic-acid-containing acrylic polymer (C), an aqueous solution prepared by diluting a urethane-associative thickener [supplied by ADEKA CORPORATION under the trade name "ADEKA NOL UH-550", active component: 30 percent by weight] with water so as to have an active component content of 5 percent by weight, as shown in Table 1.

Comparative Example 3

A removable water-dispersible acrylic pressure-sensitive adhesive composition and a pressure-sensitive adhesive sheet were prepared by the procedure of Example 1, except for not using the thickener containing a carboxylic-acid-containing acrylic polymer (C) and for using a water-soluble crosslinking agent alone without using a water-insoluble crosslinking agent.

Evaluation

Evaluations were performed on the pressure-sensitive adhesive sheets prepared according to the examples and comparative examples by measuring methods or evaluation methods as mentioned below. The solvent-insoluble content of the pressure-sensitive adhesive layer (after crosslinking) was measured by the aforementioned measuring method.
Evaluation results are shown in Table 1.

(1) Prevention of Increase in Adhesive Strength Initial Adhesive Strength

Each of the pressure-sensitive adhesive sheets prepared according to the examples and comparative examples

(sample size: 25 mm in width and 100 mm in length) was affixed to a deflector plate at a pressure of 0.25 MPa at a rate of 0.3 m/min using a laminator (small-sized laminator, supplied by Tester Sangyo Co., Ltd.). The deflector plate was made from a material triacetylcellulose (TAC) and had an arithmetic mean surface roughness Ra of about 21 nm in the machine direction (MD), about 31 nm in the transverse direction (TD), and about 26 nm on an average in the machine direction and the transverse direction.
The laminated sample of the pressure-sensitive adhesive sheet and the deflector plate was left stand at an ambient temperature of 23°C and relative humidity of 50% for 20 minutes, subjected to a 180-degree peel test under conditions mentioned below, an adhesive strength (N/25 mm) of the pressure-sensitive adhesive sheet to the deflector plate was measured, and this was defined as "initial adhesive strength."

Adhesive Strength After Affixation and Storage at 40°C for One Week

Each of the pressure-sensitive adhesive sheets prepared according to the examples and comparative examples (sample size: 25 mm in width and 100 mm in length) was affixed to a deflector plate at a pressure of 0.25 MPa at a rate of 0.3 m/min using a laminator (small-sized laminator, supplied by Tester Sangyo Co., Ltd.). The deflector plate was made from a material triacetylcellulose (TAC) and had an arithmetic mean surface roughness Ra of about 21 nm in the machine direction (MD), about 31 nm in the transverse direction (TD), and about 26 nm on an average in the machine direction and the transverse direction.
The laminated sample of the pressure-sensitive adhesive sheet and the deflector plate was stored at an ambient temperature of 40°C for one week, left stand at an ambient temperature of 23°C and relative humidity of 50% for 2 hours, subjected to a 180-degree peel test under conditions mentioned below, an adhesive strength (N/25 mm) of the pressure-sensitive adhesive sheet to the deflector plate was measured, and this was defined as "adhesive strength after affixation and storage at 40°C for one week."
The 180-degree peel test was performed at an ambient temperature of 23°C and relative humidity of 50% and at a tensile speed of 0.3 m/min using a tensile tester.
A sample can be evaluated as excelling in prevention of increase in adhesive strength when having a difference between the initial adhesive strength and the adhesive strength after affixation and storage at 40°C for one week [(adhesive strength after affixation and storage at 40°C for one week)-(initial adhesive strength)] of 0.10 N/25 mm or less.

(2) Less-Staining Properties (Suppression of Whitening Staining) [High-Humidity Test]

Each of the pressure-sensitive adhesive sheets prepared according to the examples and comparative examples (sample size: 25 mm in width and 100 mm in length) was affixed to a deflector plate (supplied by Nitto Denko Corporation under the trade name "SEG1425DUHC", 70 mm in width and 120 mm in length) at a pressure of 0.25 MPa at a rate of 0.3 m/min using a laminator (small-sized laminator, supplied by Tester Sangyo Co., Ltd.).
The deflector plate affixed to the pressure-sensitive adhesive sheet was as intact left stand at 80°C for 4 hours, and then the pressure-sensitive adhesive sheet was removed therefrom. The deflector plate, from which the pressure-sensitive adhesive sheet had been removed, was left stand in a high-humidity environment (at a temperature of 23°C and relative humidity of 90%) for 12 hours, the surface of which was visually observed, and less-staining properties were evaluated according to the following criteria:

Good less-staining properties (Good): No change was observed in a portion where the pressure-sensitive adhesive sheet had been affixed and in a portion where the pressure-sensitive adhesive sheet had not been affixed;
Poor less-staining properties (Poor): Whitening was observed in a portion where the pressure-sensitive adhesive sheet had been affixed.

(3) Appearance (Presence or Absence of Dimples and Bubbles)

The surface of the pressure-sensitive adhesive layer of each of the pressure-sensitive adhesive sheets prepared according to the examples and comparative examples was visually observed. The number of defects (dimples and bubbles) in an observation area of 10 cm wide and 10 cm long was measured, and the appearance was evaluated according to the following criteria:

Good appearance (Good): The number of defects was from 0 to 100;
Poor appearance (Poor): The number of defects was 101 or more.

(4) Elongation at Break (Elongation at Rupture) of Pressure-Sensitive Adhesive Layer (After Crosslinking)

[Tensile Test]

Each of the removable water-dispersible acrylic pressure-sensitive adhesive compositions prepared in the examples and comparative examples was applied to a surface, which had been treated with a silicone, of a PET film (supplied by Mitsubishi Plastics, Inc. under the trade name "MRF38") so as to have a dry thickness of 50 μm, dried in an oven with internal air circulation at 120°C for 2 minutes, aged at 50°C for 3 days, and thereby yielded a pressure-sensitive adhesive layer.
Next, the pressure-sensitive adhesive layer was rounded and thereby yielded a cylindrical pressure-sensitive adhesive layer sample (50 mm in length and 1 $mm^2$ in sectional area (base area)).
The elongation at rupture (elongation at break) of the pressure-sensitive adhesive layer sample was measured by performing a tensile test at a tensile speed of 50 mm/min using a tensile tester, while setting chucks so as to give an initial measurement length (chuck-to-chuck distance) of 10 mm.
The elongation at rupture (elongation at break) indicates an elongation at the time when the specimen (pressure-sensitive adhesive layer sample) breaks, and is calculated according to the following equation:

"Elongation at rupture (elongation at break)" (%) = ("Length of specimen at rupture (chuck-to-chuck distance at rupture)"-"Initial length (10 mm)")/"Initial length (10 mm)" × 100

TABLE 1

| | | | Ex.1 | Ex.2 | Ex.3 | Ex. 4 | Ex. 5 | Ex. 6 | Ex. 7 | Ex.8 | Com. Ex. 1 | Com. Ex. 2 | Com. Ex. 3 |
|---|---|---|---|---|---|---|---|---|---|---|---|---|---|
| Acrylic emulsion polymer (A) | Constitutive monomer (part by weight) | 2EHA | 92 | 92 | 92 | 92 | 92 | 92 | 92 | 92 | 92 | 92 | 92 |
| | | AA | 4 | 4 | 4 | 4 | 4 | 4 | 4 | 4 | 4 | 4 | 4 |
| | | MMA | 4 | 4 | 4 | 4 | 4 | 4 | 4 | 4 | 4 | 4 | 4 |
| | Emulsifier (part by weight) | HS-1025 | 3 | 3 | 3 | 3 | 3 | 3 | 3 | 3 | 3 | 3 | 3 |
| | 42% by weight water dispersion of acrylic emulsion polymer (A) (part by weight | | 238 | 239 | 238 | 238 | 238 | 238 | 238 | 238 | 238 | 238 | 238 |
| | Water-insoluble crosslinking agent (B) (part by weight) | TETRAD-C | 3 | 3 | 3 | 3 | 3 | 3 | 3 | 3 | 3 | 3 | - |
| | | SN Thickener 630 | 20 | - | - | - | - | - | - | - | - | - | - |

(continued)

| | | | Ex.1 | Ex.2 | Ex.3 | Ex. 4 | Ex. 5 | Ex. 6 | Ex. 7 | Ex.8 | Com. Ex. 1 | Com. Ex. 2 | Com. Ex. 3 |
|---|---|---|---|---|---|---|---|---|---|---|---|---|---|
| Removable water-dispersible acrylic pressure-sensitive adhesive composition | Aqueous solution of carboxylic-acid-containing acrylic polymer (C) having an active component content of 5% by weight (part by weight) | SN Thickener 634 | - | 20 | - | - | - | - | - | - | - | - | - |
| | | SN Thickener 640 | - | - | 20 | - | - | - | - | - | - | - | - |
| | | Aron A-7070 | - | - | - | 20 | - | - | - | - | - | - | - |
| | | Aron A-7075 | - | - | - | - | 20 | - | | - | | - | - |
| | | Aron B-300K | - | - | - | - | - | 20 | - | - | - | - | - |
| | | Amn B-500 | - | - | - | - | - | - | 20 | - | - | - | - |
| | | PRIMAL ASE-60 | - | - | - | - | - | - | - | 20 | - | - | - |
| | Aqueous solution of urethane associative thickener having an active component content of 5% by weight (part by weight) | ADEKA NOL UH-550 | - | - | - | - | - | - | - | - | - | 20 | - |
| | Other crosslin agent (water-soluble crosslinking agent) (part by weight) | Denacol EX-512 | - | - | - | - | - | - | - | - | - | - | 4.6 |
| | [Number of moles of carboxyl-reactive functional groups]/[Number of moles of carboxyl groups] (molar ratio) | | 05 | 0.5 | 05 | 05 | 05 | 0.5 | 05 | 0.5 | 0.5 | 05 | 0.5 |

(continued)

| | | | Ex.1 | Ex.2 | Ex.3 | Ex. 4 | Ex. 5 | Ex. 6 | Ex. 7 | Ex.8 | Com. Ex. 1 | Com. Ex. 2 | Com. Ex. 3 |
|---|---|---|---|---|---|---|---|---|---|---|---|---|---|
| Evaluation results | Prevention of increase in adhesive strength | Initial adhesive strength (N/25 mm) | 0.09 | 0.09 | 0.09 | 0.08 | 0.08 | 0.09 | 0.08 | 0.08 | 0.07 | 0.06 | 0.10 |
| | | Adhesive strength after affixation and storage at 40°C for one week (N/25 mm) | 0.10 | 0.10 | 012 | 0.11 | 010 | 0.11 | 0.09 | 0.11 | 0.08 | 0.08 | 0.23 |
| | Less-staining properties | | Good | Good | Good | Good | Good | Good | Good | Good | Good | Good | Poor |
| | Appearence | | Good | Good | Good | Good | Good | Good | Good | Good | Poor | Poor | Good |
| | Solvent-insoluble content of pressure-sensitive adhesive layer (after crosslinking) (% by weight) | | 96 | 96 | 96 | 96 | 95 | 95 | 96 | 96 | 96 | 95 | 91 |
| | Elongation at rupture of pressure-sensitive adhesive layer (after crosslinking) (%) | | 104 | 107 | 98 | 105 | 113 | 101 | 104 | 109 | 111 | 103 | 324 |

The abbreviations used in Table 1 are as follows. In Table 1, the blending quantities of respective components of the removable water-dispersible acrylic pressure-sensitive adhesive compositions are indicated as actual blending quantities (blending quantities of the commercial products).

[Constitutive Monomers]

2EHA: 2-Ethylhexyl acrylate
MMA: Methyl methacrylate
AA: Acrylic acid

[Emulsifier]

HS-1025: Trade name "AQUALON HS-1025" (reactive nonionic-anionic emulsifier) supplied by Dai-ichi Kogyo Seiyaku Co., Ltd.

[Crosslinking Agents]

TETRAD-C: Trade name "TETRAD-C" (1,3-bis(N,N-diglycidylaminomethyl)cyclohexane, epoxy equivalents: 110, number of functional groups: 4) supplied by Mitsubishi Gas Chemical Company, Inc.
Denacol EX-512: Trade name "Denacol EX-512" (polyglycerol polyglycidyl ether, epoxy equivalents: 168, number of functional groups: about 4) supplied by Nagase Chemtex Corporation

[Thickener Containing Carboxylic-Acid-Containing Acrylic Polymer (C)]

SN Thickener 630: Trade name "SN Thickener 630" (active component: 30 percent by weight, total amount of acrylic acid and methacrylic acid in total constitutive monomers constituting the carboxylic-acid-containing acrylic polymer (C) (hereinafter also simply referred to as "total amount of acrylic acid and methacrylic acid"): 21 percent by weight or more) supplied by SAN NOPCO LIMITED
SN Thickener 634: Trade name "SN Thickener 634" (active component: 30 percent by weight, total amount of acrylic acid and methacrylic acid: 21 percent by weight or more) supplied by SAN NOPCO LIMITED
SN Thickener 640: Trade name "SN Thickener 640" (active component: 30 percent by weight, total amount of acrylic acid and methacrylic acid: 41 percent by weight or more) supplied by SAN NOPCO LIMITED
Aron A-7070: Trade name "Aron A-7070" (active component: 20 percent by weight, total amount of acrylic acid and methacrylic acid: 41 percent by weight or more) supplied by Toagosei Co., Ltd.
Aron A-7075: Trade name "Aron A-7075" (active component: 20 percent by weight, total amount of acrylic acid and methacrylic acid: 41 percent by weight or more) supplied by Toagosei Co., Ltd.
Aron B-300K: Trade name "Aron B-300K" (active component: 45 percent by weight, total amount of acrylic acid and methacrylic acid: 41 percent by wight or more) supplied by Toagosei Co., Ltd.
Aron B-500: Trade name "Aron B-500" (active component: 35 percent by weight, total amount of acrylic acid and methacrylic acid: 41 percent by weight or more) supplied by Toagosei Co., Ltd.
PRIMAL ASE-60: Trade name "PRIMAL ASE-60" (active component: 28 percent by weight, total amount of acrylic acid and methacrylic acid: 41 percent by weight or more) supplied by Rohm and Haas Company

[Urethane-Associative Thickener]

ADEKA NOL UH-550: Trade name "ADEKA NOL UH-550" (active component: 30 percent by weight) supplied by ADEKA CORPORATION

Results in Table 1 demonstrates as follows. The pressure-sensitive adhesive sheets (Examples 1 to 8) each having a pressure-sensitive adhesive layer formed from a pressure-sensitive adhesive composition satisfying the conditions specified in the present invention were pressure-sensitive adhesive sheets having good appearance, not causing whitening staining of deflector plates in a high-humidity environment after affixation and removal of the pressure-sensitive adhesive sheets, and thereby excelling in less-staining properties. These pressure-sensitive adhesive sheets showed less increase in adhesive strength with time after affixation.
In contrast, the samples containing no carboxylic-acid-containing acrylic polymer (C) (Comparative Examples 1 and 2) suffered from crawling defects in the pressure-sensitive adhesive layer and had poor appearances. The sample using no water-insoluble crosslinking agent (Comparative Example 3) had a high adhesive strength after affixation and storage

(adhesive strength after affixation and storage at 40°C for one week), thus showed a large increase in adhesive strength with time, and caused staining.

As is described above, samples using pressure-sensitive adhesive compositions not satisfying conditions specified in the present invention failed to strike a balance between appearance characteristics and prevention of increase in adhesive strength.

While preferred embodiments of the present invention have been described using specific terms, such description is for illustrated purposes only, and it is to be understood that various changes and modifications may be made without departing from the spirit and scope of the present invention as defined in the appended claims.

## Claims

**1.** A removable water-dispersible acrylic pressure-sensitive adhesive composition comprising:

an acrylic emulsion polymer (A) including a (meth)acrylic alkyl ester and a carboxyl-containing unsaturated monomer as essential constitutive monomers and having a content of the (meth)acrylic alkyl ester of from 70 to 99.5 percent by weight and a content of the carboxyl-containing unsaturated monomer of from 0.5 to 10 percent by weight, each based on the total amount of constitutive monomers;
a water-insoluble crosslinking agent (B); and
a carboxylic-acid-containing acrylic polymer (C) including (meth)acrylic acid as an essential constitutive monomer and having a total content of acrylic acid and methacrylic acid of 11 percent by weight or more based on the total amount of constitutive monomers.

**2.** The removable water-dispersible acrylic pressure-sensitive adhesive composition according to claim 1, wherein the acrylic emulsion polymer (A) is a polymer polymerized with a reactive emulsifier including a radically polymerizable functional group in a molecule.

**3.** The removable water-dispersible acrylic pressure-sensitive adhesive composition according to one of claims 1 and 2, wherein the water-insoluble crosslinking agent (B) has a functional group reactive with carboxyl group, and wherein the functional group is contained in a number of moles of from 0.3 to 1.3 moles per 1 mole of carboxyl group in the carboxyl-containing unsaturated monomer used as the constitutive monomer of the acrylic emulsion polymer (A).

**4.** A pressure-sensitive adhesive sheet comprising:

a substrate; and
a pressure-sensitive adhesive layer arranged on at least one side of the substrate and formed from the removable water-dispersible acrylic pressure-sensitive adhesive composition of any one of claims 1 to 3.

**5.** The pressure-sensitive adhesive sheet according to claim 4, wherein the pressure-sensitive adhesive layer has a solvent-insoluble content of 90 percent by weight or more and an elongation at break of 200% or less.

**6.** The pressure-sensitive adhesive sheet according to one of claims 4 and 5, as a surface-protective film for an optical element.

## Patentansprüche

**1.** Entfernbare, wasserdispergierbare Acrylhaftklebezusammensetzung, umfassend:

ein Acrylemulsionspolymer (A), mit einem (Meth)acrylsäurealkylester und einem Carboxyl-enthaltenden ungesättigten Monomer als wesentliche konstitutive Monomere und mit einem Gehalt an (Meth)acrylsäurealkylester von 70 bis 99,5 Gewichtsprozent und einem Gehalt an Carboxyl-enthaltendem ungesättigtem Monomer von 0,5 bis 10 Gewichtsprozent, jeweils bezogen auf die Gesamtmenge der konstitutiven Monomere;
ein wasserunlösliches Vernetzungsmittel (B); und
ein Carbonsäure enthaltendes Acrylpolymer (C), mit (Meth)acrylsäure als einem wesentlichen konstitutiven Monomer und einem Gesamtgehalt an Acrylsäure und Methacrylsäure von 11 Gewichtsprozent oder mehr, bezogen auf die Gesamtmenge der konstitutiven Monomere.

2. Entfernbare, wasserdispergierbare Acrylhaftklebezusammensetzung nach Anspruch 1, wobei das Acrylemulsionspolymer (A) ein Polymer ist, das mit einem reaktiven Emulgator polymerisiert ist, der eine radikalisch polymerisierbare funktionelle Gruppe im Molekül enthält.

3. Entfernbare, wasserdispergierbare Acrylhaftklebezusammensetzung nach einem der Ansprüche 1 und 2, wobei das wasserunlösliche Vernetzungsmittel (B) eine funktionelle Gruppe aufweist, die mit einer Carboxylgruppe reaktiv ist, und wobei die funktionelle Gruppe in einer Molzahl von 0,3 bis 1,3 Mol pro 1 Mol Carboxylgruppe in dem Carboxylenthaltenden ungesättigten Monomer enthalten ist, das als das konstitutive Monomer des Acrylemulsionspolymers (A) verwendet wird.

4. Haftklebefolie, umfassend:

ein Substrat; und
eine Haftklebeschicht, die auf mindestens einer Seite des Substrats angeordnet ist und aus der entfernbaren, wasserdispergierbaren Acrylhaftklebezusammensetzung nach einem der Ansprüche 1 bis 3 gebildet ist.

5. Haftklebefolie nach Anspruch 4, wobei die Haftklebeschicht einen Lösungsmittelunlöslichen Anteil von 90 Gewichtsprozent oder mehr und eine Bruchdehnung von 200% oder weniger aufweist.

6. Haftklebefolie nach einem der Ansprüche 4 und 5, als Oberflächenschutzfolie für ein optisches Element.

**Revendications**

1. Composition adhésive acrylique sensible à la pression, dispersible dans l'eau, et amovible, comprenant :

un polymère en émulsion acrylique (A) renfermant un ester d'alkyle (méth)acrylique et un monomère insaturé contenant un carboxyle en tant que monomères constitutifs essentiels et ayant une teneur en ester d'alkyle (méth)acrylique de 70 à 99,5 pour cent en poids et une teneur en monomère insaturé contenant un carboxyle de 0,5 à 10 pour cent en poids, rapportées chacune à la quantité totale des monomères constitutifs ;
un agent réticulant insoluble dans l'eau (B) ; et
un polymère acrylique contenant un acide carboxylique (C) renfermant de l'acide (méth)acrylique en tant que monomère constitutif essentiel et ayant une teneur totale en acide acrylique et en acide méthacrylique supérieure ou égale à 11 pour cent en poids rapportée à la quantité totale des monomères constitutifs.

2. Composition adhésive acrylique sensible à la pression, dispersible dans l'eau, et amovible, selon la revendication 1, dans laquelle le polymère en émulsion acrylique (A) est un polymère polymérisé avec un agent émulsifiant réactif renfermant un groupe fonctionnel polymérisable par voie radicalaire dans une molécule.

3. Composition adhésive acrylique sensible à la pression, dispersible dans l'eau, et amovible, selon l'une des revendications 1 et 2, dans laquelle l'agent réticulant insoluble dans l'eau (B) a un groupe fonctionnel réactif avec le groupe carboxyle, ledit groupe fonctionnel étant contenu en un nombre de moles compris entre 0,3 et 1,3 moles par mole de groupe carboxyle dans le monomère insaturé contenant un carboxyle utilisé en tant que monomère constitutif du polymère en émulsion acrylique (A).

4. Feuille adhésive sensible à la pression comprenant :

un substrat ; et
une couche adhésive sensible à la pression disposée sur au moins une face du substrat et formée de la composition adhésive acrylique sensible à la pression, dispersible dans l'eau, et amovible, de l'une quelconque des revendications 1 à 3.

5. Feuille adhésive sensible à la pression selon la revendication 4, dans laquelle la couche adhésive sensible à la pression a une teneur en matières insolubles dans les solvants supérieure ou égale à 90 pour cent en poids et un allongement à la rupture inférieur ou égal à 200 %.

6. Feuille adhésive sensible à la pression selon l'une des revendications 4 et 5, en tant que film protecteur de surface pour élément optique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11961 A
- JP 2001064607 A
- JP 2001131512 A
- JP 2003027026 A
- JP 3810490 B
- JP 2004091563 A
- JP 2006169496 A
- JP 2007031585 A